# EUROPÄISCHE PATENTSCHRIFT

(11) **EP 1 339 544 B1**
(45) Veröffentlichungstag und Bekanntmachung des Hinweises auf die Patenterteilung: **06.04.2011**
(21) Anmeldenummer: 01984754.0
(22) Anmeldetag: 22.11.2001
(51) Int. Cl.: B32B 15/08, B32B 27/40, B63B 3/14, B63B 5/24

(54) **VERFAHREN ZUR HERSTELLUNG VON VERBUNDELEMENTEN**
METHOD FOR THE PRODUCTION OF COMPOSITE ELEMENTS
PROCEDE DE FABRICATION D'ELEMENTS COMPOSITES

(30) Priorität: 28.11.2000 DE 10058982
(43) Veröffentlichungstag der Anmeldung: 03.09.2003
(73) Patentinhaber: BASF SE, 67056 Ludwigshafen (DE)
(72) Erfinder: MERTES, Jürgen, 67122 Altrip (DE)
(86) Internationale Anmeldenummer: PCT/EP2001/013594
(87) Internationale Veröffentlichungsnummer: WO 2002/043954

(56) Entgegenhaltungen:
- EP-A- 0 562 441
- WO-A-01/32414
- WO-A-98/21029
- WO-A-99/58333
- WO-A-99/64233
- DE-A- 2 856 729
- DE-A- 3 005 015
- GB-A- 1 421 898
- GB-A- 1 503 016
- GB-A- 2 000 725
- GB-A- 2 066 156
- GB-A- 2 366 543
- US-A- 4 673 453
- DATABASE WPI Section Ch, Week 198809 Derwent Publications Ltd., London, GB; Class A14, AN 1988-060975 XP002197706 & JP 63 017040 A (KAWASAKI STEEL CORP), 25. Januar 1988 (1988-01-25)

## Beschreibung

Die Erfindung betrifft Verfahren zur Herstellung von Verbundelementen, die folgende Schichtstruktur aufweisen:
(i) 2 mm bis 20 mm, bevorzugt 2 mm bis 10 mm, besonders bevorzugt 5 mm bis 10 mm Metall,
(ii) 10 mm bis 300 mm, bevorzugt 10 mm bis 100 mm Kunststoffe, wobei man als Kunststoff Polyisocyanat-Polyadditionsprodukte, erhältlich durch Umsetzung von (a) Isocyanaten mit (b) gegenüber Isocyanaten reaktiven Verbindungen einsetzt und man den Kunststoff (ii) durch Umsetzung von (a) und (b) kontinuierlich in einer Bandanlage hergestellt,
   und gegebenenfalls
(iii) 2 mm bis 20 mm, bevorzugt 2 mm bis 10 mm, besonders bevorzugt 5 mm bis 10 mm Metall,
wobei das Verbundelement bevorzugt auch die Schicht (iii) enthält und man (ii) durch Schmelzkleben mit (i) und gegebenenfalls (iii) verbindet, indem man die Oberfläche des Kunststoffs erweicht oder verflüssigt und in Kontakt mit der jeweiligen Oberfläche der jeweiligen Metallschicht abkühlt.

Des weiteren bezieht sich die Erfindung auf derart erhältliche Verbundelemente und ihre Verwendung.

Für Konstruktion von Schiffen, beispielsweise Schiffsrümpfen und Laderaumabdeckungen, Brücken, Dächern oder Hochhäusern müssen Konstruktionsteile verwendet werden, die erheblichen Belastungen durch äußere Kräfte standhalten können. Derartige Konstruktionsteile bestehen aufgrund dieser Anforderungen üblicherweise aus Metallplatten oder Metallträgern, die durch eine entsprechende Geometrie oder geeignete Verstrebungen verstärkt sind. So bestehen Schiffsrümpfe von Tankschiffen aufgrund von erhöhten Sicherheitsnormen üblicherweise aus einem inneren und einem äußeren Rumpf, wobei jeder Rumpf aus 15 mm dicken Stahlplatten, die durch ca. 2 m lange Stahlverstrebungen miteinander verbunden sind, aufgebaut ist. Da diese Stahlplatten erheblichen Kräften ausgesetzt sind, werden sowohl die äußere, als auch die innere Stahlhülle durch aufgeschweißte Verstärkungselemente versteift. Nachteilig an diesen klassischen Konstruktionsteilen wirken sich sowohl die erheblichen Mengen an Stahl aus, die benötigt werden, als auch die zeit- und arbeitsintensive Herstellung. Zudem weisen derartige Konstruktionsteile ein erhebliches Gewicht auf, wodurch sich eine geringere Tonnage der Schiffe und ein erhöhter Treibstoffbedarf ergibt. Zusätzlich sind solche klassischen Konstruktionselemente auf der Basis von Stahl sehr pflegeintensiv, da sowohl die äußeren Oberfläche, als auch die Oberflächen der Stahlteile zwischen der äußeren und inneren Hülle regelmäßig gegen Korrosion geschützt werden müssen.

Als Ersatz für die Stahlkonstruktionen sind SPS-Elemente (Sandwich-plate-system) bekannt, die einen Verbund aus Metall und Kunststoff beinhalten. Durch die Haftung des Kunststoffs an den zwei Metallschichten entstehen Verbundelemente mit außerordentlichen Vorteilen gegenüber bekannten Stahl-Konstruktionen. Allgemein sind SPS-Elemente bekannt aus den Schriften US 6 050 208, US 5 778 813, DE-A 198 25 083, DE-A 198 25 085, DE-A 198 25 084, DE-A 198 25 087 und DE-A 198 35 727.

Der vorliegenden Erfindung lag die Aufgabe zugrunde, neue Verfahren zur Herstellung dieser Verbundelemente zu entwickeln, die insbesondere eine schnelle und einfache Handhabung ermöglichen.

Diese Aufgabe wurde dadurch gelöst, daß man (ii) mit (i) und gegebenenfalls (iii) verklebt, indem man die Oberfläche des Kunststoffs erweicht oder verflüssigt und in Kontakt mit der jeweiligen Oberfläche der Metallschicht abkühlt.

Unter dem Ausdruck "kompakte" Polyisocyanat-Polyadditionsprodukte sind Polyisocyanat-Polyadditionsprodukte zu verstehen, die nicht aus einem Netzwerk von Zellen, die mit Gas gefüllt sind und über Stege und Zellwände zusammenhängen, bestehen.

Besonders bevorzugt sind Verbundelemente, die die Schichten (i), (ii) und (iii) enthalten, wobei sich die Schicht (ii) zwischen den Schichten (i) und (iii) befindet.

Während der Stand der Technik ausschließlich die Herstellung von Verbundelementen vergleichbarer Abmessungen durch die Umsetzung von (a) mit (b) zwischen (i) und (iii) offenbart, bietet das erfindungsgemäße Verfahren mit der Vorfertigung von (ii) und der anschließenden Verklebung mit (i) und gegebenenfalls (iii) einige Vorteile:
- Die umfangreichen chemischen Arbeiten zur Herstellung von (ii) könnten von den Arbeiten mit den Metallplatten getrennt werden. Dies ist insbesondere für den Einsatz in Produktionsanlagen, die auf Metallbearbeitung spezialisiert sind, von Vorteil.
- Es lassen sich erfindungsgemäß auch thermoplastische Kunststoffe verwenden, die beispielsweise im Extrusionsverfahren hergestellt wurden. Dies kann von erheblichem Vorteil sein, da sich große Kavitäten, wie sie im Falle von SPS in der Regel vorliegen, mittels Spritzguß des heißen, flüssigen Thermoplasts kaum füllen lassen. Zudem tritt beim Spritzgiessen der thermoplastischen Kunststoffe beim Abkühlen der Schmelze ein unerwünschter Volumenschrumpf auf, der erfindungsgemäß durch die Vorfertigung der Kunststoffpanele vermieden werden kann.
- Die Umsetzung von (a) mit (b) erfolgt unter Wärmeentwicklung. Durch die nach der Reaktion bei Ausgangskomponenten zur Herstellung von Reaktivkunststoffen auftretende Abkühlung und auch durch die Reaktion selbst (Polymerisationsschrumpf) kann es zu einer Volumenänderung von (ii) im Verhältnis zu (i) und (iii) und damit zu einer verminderten Haftung von (ii) an (i) und (iii) führen. Wird das vorgefertigte, üblicherweise ausreagierte (ii) mit (i) und gegebenenfalls (iii) verklebt, kann ein Schrumpf von (ii) während und nach der Umsetzung zu (ii) vermieden werden.
- Ein Abdichten des Raumes zwischen (i) und (iii) zur Herstellung von (ii) oder umfangreiche Formen, die auch (i) und (iii) aufnehmen, ist nicht erforderlich.

Das erfindungsgemäße Verfahren kann anhand der folgenden zwei Verfahrensschritte schematisch dargestellt werden:

### 1. Herstellung von (ii)

Als (ii) Kunststoffe können allgemein bekannte Kunststoffe, beispielsweise thermoplastische Kunststoffe oder vernetzte Kunststoffe, bevorzugt harte Kunststoffe eingesetzt werden, beispielsweise Polystyrol, Polycarbonat, Polyethylen, Polypropylen, Polyvinylchlorid, Polyamid und/oder Polybutylentherephthalat, thermoplastische oder vernetzte Polyurethane, die gegebenenfalls Harnstoff- und/oder Polyisocyanaturatstrukturen aufweisen, eingesetzt werden, wobei auch Mischungen insbesondere von thermoplastischen Kunststoffen möglich sind. Besonders bevorzugt werden harte, insbesondere kompakte Kunststoffe eingesetzt. Derartige Kunststoffe sind vielfältig beschrieben, dem Fachmann allgemein bekannt und kommerziell in verschiedenster Zusammensetzung erhältlich. Bevorzugt werden Polyisocyanat-Polyadditionsprodukte erhältlich durch Umsetzung von (a) Isocyanaten mit (b) gegenüber Isocyanaten reaktiven Verbindungen eingesetzt. Die Herstellung von (ii) ist in Bezug auf die Ausgangsstoffe und die Apparaturen allgemein bekannt. Beispielsweise kann (ii) in einer gegebenenfalls temperierbaren Form beispielsweise unter Verwendung von Formtrennmitteln hergestellt werden. Die Herstellung von Polyisocyanat-Polyadditionsprodukten in einer Form ist dem Fachmann allgemein bekannt. Außerdem ist es möglich, (ii) durch Umsetzung von (a) und (b) in einer Bandanlage herzustellen, beispielsweise kontinuierlich. Die Kunststoffe (ii) werden entsprechend den gewünschten Abmessungen des Verbundelementes üblicherweise in einer Dicke von 10 mm bis 300 mm, bevorzugt 10 mm bis 100 mm hergestellt, wobei es auch möglich ist, dickere Schichten herzustellen und diese anschließend vor dem Verkleben auf die gewünschte Dicke zu schneiden. In Bezug auf die Breite und Länge von (ii) sind prinzipiell kaum Grenzen gesetzt. Bevorzugt sind Abmessungen von 0,5 m Breite x 0,5 m Länge bis 5 m Breite x 10 m Länge. Die hergestellten Kunststoffe können mittels üblicher Verfahren, beispielsweise durch Sägen, auf eine gewünschte Größe zugeschnitten werden. Die Polyisocyanat-Polyadditionsprodukte können, je nach Verwendung von Füllstoffen, Gasen oder Treibmitteln Dichten von 350 bis 1400 kg/m³, bevorzugt 700 bis 1200 kg/m³ aufweisen. Die Einstellung einer geeigneten Dichte ist dem Fachmann allgemein bekannt und kann in Routineexperimenten ermittelt werden. Gegebenenfalls können die Formen mit einer Folie, beispielsweise üblichen Kunststofffolien, z.B. Polypropylen, Polyethylen oder Polyurethan ausgestattet und die Herstellung innerhalb der Folie durchgeführt werden. So haftet das Polyisocyanat-Polyadditionsprodukt üblicherweise an der Folie. In diesem Fall können (i) und (ii) mit der Folie verklebt werden, die sich dann zwischen (i) bzw. (iii) und (ii) befindet. Entsprechendes gilt für die Herstellung von (ii) mittels einer Bandanlage, wenn das Reaktionsgemisch enthaltend (a) und (b) innerhalb eines Raumes umgesetzt wird, der von Folie begrenzt wird. Bandanlagen sind dem Fachmann zur Herstellung von (ii) allgemein bekannt, beispielsweise zur kontinuierlichen Herstellung von Polyurethanhartschaumplatten. Werden die Polyisocyanat-Polyadditionsprodukte in einer Form hergestellt, die mit einem üblichen Trennmittel zur anschließenden Entformung von (ii) ausgestattet wurde, so wird das Trennmittel, wenn es aufgrund seiner chemischen Eigenschaften das Verkleben beeinträchtigt, bevorzugt entfernt, beispielsweise durch dem Fachmann bekannte, allgemein übliche Lösemittel.

### 2. Verkleben von (ii) mit (i) und gegebenenfalls (iii)

Nach der Herstellung von (ii) und gegebenenfalls dem Zuschnitt auf die gewünschten Abmessungen wird (ii) mit (i) und gegebenenfalls (iii) verklebt. Bevorzugt weisen (i) und gegebenenfalls (iii) mindestens die gleiche Breite und Länge wie (ii) auf, bevorzugt stehen sowohl (i) als auch gegebenenfalls (iii) an jedem Rand von (ii) jeweils mindestens um 7 cm, bevorzugt 7,5 bis 25 cm über. Dieser Überstand von (i) und gegebenenfalls (iii) ermöglicht es, das fertige Verbundelement mit anderen Verbundelementen zu größeren Verbundelementen zu verschweißen, ohne daß der Schweißvorgang aufgrund der Wärmeeinwirkung an der Schweißnaht zu einer Zerstörung von (ii) führt. Das Verkleben von Materialien ist allgemein bekannt und vielfältig beschrieben. Thermoplastische Kunststoffe (ii) werden mittels Schmelzkleben mit (i) und gegebenenfalls (iii) haftend verbunden. Beim Schmelzkleben wird die Oberfläche von (ii), die mit der jeweiligen Metallschicht haftend verbunden werden soll, derart erweicht oder bevorzugt verflüssigt, daß beim anschließenden Kontakt mit der Oberfläche von (i) bzw. gegebenenfalls (iii) der Kunststoff abkühlt und eine Haftung an die Metallschicht bewirkt.

Die Kunststoffe (ii) der erfindungsgemäß hergestellten Verbundelemente, weisen soweit auf sie anwendbar bevorzugt einen Elastizitätsmodul von >275 MPa im Temperaturbereich von -40 bis 90 °C (nach DIN EN ISO 527), eine Adhäsion zu (i) und gegebenenfalls (iii) von >4 MPa (nach DIN 53530), eine Bruchdehnung von >30 % im Temperaturbereich von -40 bis 90 °C (nach DIN EN ISO 527), eine Zugfestigkeit von >20 MPa (nach DIN EN ISO 527) und eine Druckfestigkeit von> 20 MPa (nach DIN 53421) auf.

Die Oberflächen von (i) und gegebenenfalls (iii) werden bevorzugt vor der Herstellung der Verbundelemente zur Reinigung und Erhöhung der Oberflächenrauhigkeit mit Sand oder Stahlkugeln, bevorzugt mit Korund oder Eisenkies gestrahlt. Dieses Strahlen kann nach den üblichen Verfahren erfolgen, bei denen das Strahlgut beispielsweise unter hohem Druck auf die Oberflächen auftrifft. Geeignete Apparaturen für eine solche Behandlung sind kommerziell erhältlich.

Diese Behandlung der Oberflächen von (i) und (iii), die in Kontakt mit (ii) stehen, führt zu einer deutlich verbesserten Verklebung von (ii) an (i) und gegebenenfalls (iii). Die Oberflächen von (i) und gegebenenfalls (iii), die mit (ii) verklebt werden, sind bevorzugt frei von anorganischen und/oder organischen Stoffen, die eine Haftung vermindern, beispielsweise Staub, Schmutz, Ölen und Fetten oder allgemein als Formtrennmitteln bekannten Stoffen.

Als Schichten (i) und gegebenenfalls (iii), üblicherweise Platten, können übliche Metalle verwendet werden, beispielsweise Eisen, üblicher Stahl, alle Arten von veredeltem Stahl, Aluminium und/oder Kupfer.

Sowohl (i) als auch (ii) können beschichtet, beispielsweise grundiert, lackiert und/oder mit üblichen Kunststoffen beschichtet bei der Herstellung der erfindungsgemäßen Verbundelemente eingesetzt werden. Bevorzugt werden (i) und gegebenenfalls (iii) unbeschichtet und besonders bevorzugt beispielsweise durch übliches Sandstrahlen gereinigt eingesetzt.

Die Herstellung der Polyisocyanat-Polyadditionsprodukten (ii), üblicherweise Polyurethan- und gegebenenfalls Polyisocyanuratprodukten, die gegebenenfalls Harnstoff- und/oder Isocyanuratstrukturen aufweisen können, insbesondere Polyurethanelastomeren, durch Umsetzung von (a) Isocyanaten mit (b) gegenüber Isocyanaten reaktiven Verbindungen gegebenenfalls in Gegenwart von (f) Treibmitteln, (d) Katalysatoren, (e) Hilfsmitteln und/oder Zusatzstoffen und/oder (c) ist vielfach beschrieben worden.

Die Ausgangsstoffe (a), (b), (c), (d), (e) und (f) in dem erfindungsgemäßen Verfahren werden im Folgenden beispielhaft beschrieben:

Als Isocyanate (a) können die an sich bekannten aliphatischen, cycloaliphatischen, araliphatischen und/oder aromatischen Isocyanate, bevorzugt Diisocyanate eingesetzt werden, die gegebenenfalls nach allgemein bekannten Verfahren biuretisiert und/oder isocyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, 1-Isocyanato-3,3,5-trimethyl-5-isocyanatomethylcyclohexan (IPDI), 2,4- und/oder 2,6-Toluylendiisocyanat (TDI), 4,4'-, 2,4'- und/oder 2,2'-Diphenylmethandiisocyanat (MDI), Polyphenyl-polymethylen-polyisocyanate und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden.

Als Isocyanatkomponente (a) kommen beispielsweise in Betracht:
- Polymer-MDI oder Roh-MDI, d.h. eine Mischung enthaltend 40 bis 45 Gew.-% 4,4'-, 2,4'- und 2,2'-Diphenylmethydiisocyanate und 55 bis 60 Gew.-% einer Mischung aus 3-, 4- und höherkernigen Polyphenyl-polymethylen-polyisocyanate. Die Gesamtmischung der Isocyanat-Komponenten hat bevorzugt einen NCO-Gehalt von 31,2 Gew.-% und eine Funktionalität von 2,7.
- Prepolymere mit einem NCO-Gehalt von 28 Gew.-%, und einer Funktionalität von 2,4, welche hergestellt werden können mit 4,4'-Diphenylmethandiisocyanat, Polyoxypropylenpolyolen mit einer Hydroxylzahl von 250 mgKOH/g gestartet mit 1,2-Propylenglycol, und einer Mischung enthaltend Diphenylmethan-diisocyanaten und Polyphenyl-polymethylen-polyisocyanate. Die Mischung hat bevorzugt einen NCO-Gehalt von 31,2 Gew.-% und eine Funktionalität von 2,7.

Als (b) gegenüber Isocyanaten reaktive Verbindungen können beispielsweise Verbindungen eingesetzt werden, die als gegenüber Isocyanaten reaktive Gruppen Hydroxyl-, Thiol- und/oder primäre und/oder sekundäre Aminogruppen aufweisen und üblicherweise ein Molekulargewicht von 60 bis 10000 g/mol aufweisen, z.B. Polyole ausgewählt aus der Gruppe der Polyetherpolyalkohole, Polyesterpolyalkohole, Polythioether-polyole, hydroxylgruppenhaltigen Polyacetale und hydroxylgruppenhaltigen aliphatischen Polycarbonate oder Mischungen aus mindestens zwei der genannten Polyole. Diese Verbindungen weisen üblicherweise eine Funktionalität gegenüber Isocyanaten von 2 bis 6 und ein Molekulargewicht von 400 bis 8000 auf und sind dem Fachmann allgemein bekannt.

Beispielsweise kommen als Polyetherpolyalkohole, die nach bekannter Technologie durch Anlagerung von Alkylenoxiden, beispielsweise Tetrahydrofuran, 1,3-Propylenoxid, 1,2- bzw. 2,3-Butylenoxid, Styroloxid und vorzugsweise Ethylenoxid und/ oder 1,2-Propylenoxid an übliche Startersubstanzen erhältlich sind. Als Startersubstanzen können beispielsweise bekannte aliphatische, araliphatische, cycloaliphatische und/oder aromatische Verbindungen eingesetzt werden, die mindestens eine, bevorzugt 2 bis 4 Hydroxylgruppen und/oder mindestens eine, bevorzugt 2 bis 4 Aminogruppen enthalten. Beispielsweise können als Startersubstanzen Ethandiol, Diethylenglykol, 1,2- bzw. 1,3-Propandiol, 1,4-Butandiol, 1,5-Pentandiol, 1,6-Hexandiol, 1,7-Heptandiol, Glycerin, Trimethylolpropan, Neopentylglykol, Zucker, beispielsweise Saccharose, Pentaerythrit, Sorbitol, Ethylendiamin, Propandiamin, Neopentandiamin, Hexamethylendiamin, Isophorondiamin, 4,4'-Diaminodicyclohexylmethan, 2-(Ethylamino)ethylamin, 3-(Methylamino)propylamin, Diethylentrimamin, Dipropylentriamin und/oder N,N'-Bis(3-aminopropyl)-ethylendiamin eingesetzt werden.

Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen.

Als Polymerpolyole, einer speziellen Klasse der Polyetherpolyole, können allgemein aus der Polyurethanchemie bekannte Verbindungen eingesetzt werden, bevorzugt Styrol-Acrylnitril-Pfropfpolyole.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Die Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.

Die erfindungsgemäßen Verbundelemente werden bevorzugt unter Verwendung von Polyetherpolyalkoholen als Komponente (b) zur Umsetzung mit den Isocyanaten hergestellt, zweckmäßigerweise solche mit einer mittleren Funktionalität gegenüber Isocyanaten von 1,5 bis 8, bevorzugt 2 bis 6, und einem Molekulargewicht von 400 bis 8000.

Die Verwendung von Polyetherpolyalkoholen bietet erhebliche Vorteile durch eine verbesserte Stabilität der Polyisocyanat-Polyadditionsprodukte gegen eine hydrolytische Spaltung und aufgrund der geringeren Viskosität, jeweils im Vergleich mit Polyesterpolyalkoholen. Die verbesserte Stabilität gegen Hydrolyse ist insbesondere bei einem Einsatz im Schiffbau vorteilhaft.

Als gegenüber Isocyanaten reaktive Verbindungen sind des weiteren Substanzen geeignet, die ein Kohlenwasserstoffgerüst mit 10 bis 40 Kohlenstoffatomen und 2 bis 4 gegenüber Isocyanaten reaktive Gruppen aufweisen. Unter dem Ausdruck Kohlenwasserstoffgerüst ist eine ununterbrochene Abfolge von Kohlenstoffatomen zu verstehen, die nicht wie beispielsweise im Falle von Ethern mit Sauerstoffatomen unterbrochen ist. Als solche Substanzen, im Folgenden auch als (b3) bezeichnet, können beispielsweise Rizinusöl und deren Derivate eingesetzt werden.

Als gegenüber Isocyanaten reaktive Verbindungen können des weiteren zusätzlich zu den genannten Verbindungen mit einem üblichen Molekulargewicht von 400 bis 8000 gegebenenfalls Diole und/oder Triole mit Molekulargewichten von 60 bis <400 als Kettenverlängerungs- und/oder Vernetzungsmittel bei dem erfindungsgemäßen Verfahren eingesetzt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 auf. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan, niedermolekulare hydroxylgruppenhaltige Polyalkylenoxide auf Basis Ethylen- und/oder 1,2-Propylenoxid und den vorgenannten Diolen und/oder Triolen als Startermoleküle und/oder Diamine wie z.B. Diethyltoluendiamin und/oder 3,5-Dimethylthio-2,4-toluene-diamin.

Sofern zur Herstellung der Polyisocyaynat-Polyadditionsprodukten Kettenverlängerungsmittel, Vernetzungsmittel oder Mischungen davon Anwendung finden, kommen diese zweckmäßigerweise in einer Menge von 0 bis 30 Gew.-%, vorzugsweise von 1 bis 30 Gew.-%, bezogen auf das Gewicht der insgesamt eingesetzten gegenüber Isocyanaten reaktiven Verbindungen (b), zum Einsatz.

Außerdem können als (b) aliphatische, araliphatische, cycloaliphatische und/oder aromatische Carbonsäuren zur Optimierung des Härtungsverlaufes bei der Herstellung von (ii) eingesetzt werden. Beispiele für solche Carbonsäuren sind Ameisensäure, Essigsäure, Bernsteinsäure, Oxalsäure, Malonsäure, Glutarsäure, Adipinsäure, Zitronensäure, Benzoesäure, Salicylsäure, Phenylessigsäure, Phthalsäure, Toluolsulfonsäure, Derivate der genannten Säuren, Isomere der genannten Säuren und beliebigen Mischungen der genannten Säuren. Der Gewichtsanteil dieser Säuren kann 0 bis 5 Gew.-%, bevorzugt 0,2 bis 2 Gew.-%, bezogen auf das Gesamtgewicht von (b), betragen.

Mit dem Einsatz von Amin-gestarteten Polyetherpolyalkoholen kann zudem das Durchhärteverhalten von der Reaktionsmischung zur Herstellung von (ii) verbessert werden. Bevorzugt werden die Verbindungen (b), wie auch die anderen Komponenten zur Herstellung von (ii), mit einem möglichst geringen Gehalt an Wasser eingesetzt, um die Bildung von Kohlendioxid durch Reaktion des Wassers mit Isocyanatgruppen zu vermeiden.

Als Komponente (c) zur Herstellung von (ii) können allgemein bekannte Verbindungen eingesetzt werden, die einen Siedepunkt bei einem Druck von 1 bar von kleiner (d.h. bei niedrigeren Temperaturen als) -50°C aufweisen, beispielsweise Luft, Kohlendioxid, Stickstoff, Helium und/oder Neon. Bevorzugt wird Luft eingesetzt. Die Komponente (c) ist bevorzugt gegenüber der Komponente (a), besonders bevorzugt gegenüber den Komponenten (a) und (b) inert, d.h. eine Reaktivität des Gases gegenüber (a) und (b) ist kaum, bevorzugt nicht nachzuweisen. Der Einsatz des Gases (c) unterscheidet sich grundlegend von dem Einsatz üblicher Treibmittel zur Herstellung von geschäumten Polyurethanen. Während übliche Treibmittel (f) flüssig eingesetzt werden oder im Falle der gasförmigen physikalischen Treibmittel in der Polyol-Komponente bis zu einem geringen Prozentsatz löslich sind und während der Umsetzung entweder aufgrund der Wärmeentwicklung verdampfen oder aber im Falle des Wassers aufgrund der Reaktion mit den Isocyanatgruppen gasförmiges Kohlendioxid entwickeln, wird in der vorliegenden Erfindung die Komponente (c) bevorzugt bereits gasförmig als Aerosol beispielsweise in der Polyol-komponente eingesetzt.

Als Katalysatoren (d) können allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen, verwendet wird. Beispielsweise können folgende Verbindungen verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid, 2,3-Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat, und/oder Alkalisalze von langkettigen Fettsäuren mit 10 bis 20 C-Atomen und gegebenenfalls seitenständigen OH-Gruppen.

Es hat sich als sehr vorteilhaft erwiesen, die Herstellung von (ii) in Gegenwart von (d) durchzuführen, um die Reaktion zu beschleunigen.

Der Reaktionsmischung zur Herstellung der Polyisocyanat-Polyadditionsprodukte (ii) können gegebenenfalls (e) Hilfsmittel und/oder Zusatzstoffe einverleibt werden. Genannt seien beispielsweise Füllstoffe, oberflächenaktive Substanzen, Farbstoffe, Pigmente, Flammschutzmittel, Hydrolyseschutzmittel, fungistatische, bakteriostatisch wirkende Substanzen und Schaumstabilisatoren.

Als oberflächenaktive Substanzen kommen z.B. Verbindungen in Betracht, welche zur Unterstützung der Homogenisierung der Ausgangsstoffe dienen und gegebenenfalls auch geeignet sind, die Struktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure. Die oberflächenaktiven Substanzen werden üblicherweise in Mengen von 0,01 bis 5 Gew.-%, bezogen auf 100 Gew.-% der insgesamt eingesetzten gegenüber Isocyanaten reaktiven Verbindungen (b), angewandt.

Geeignete Flammschutzmittel sind beispielsweise Trikresylphosphat, Tris-(2-chlorethyl)phosphat, Tris-(2-chlorpropyl)-phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten gegenüber Isocyanaten reaktiven Verbindungen, zu verwenden.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und Glasfasern geringer Länge. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern. Die anorganischen und organischen Füllstoffe können einzeln oder als Gemische verwendet werden.

Bevorzugt setzt man bei der Herstellung von (ii) 10 bis 70 Gew.-% Füllstoffe, bezogen auf das Gewicht von (ii), als (e) Hilfs- und/oder Zusatzstoffe ein. Als Füllstoffe verwendet man bevorzugt Talkum, Kaolin, Calciumcarbonat, Schwerspat, Glasfasern und/oder Mikroglaskugeln. Die Größe der Partikel der Füllstoffe ist bevorzugt so zu wählen, daß das Eintragen der Komponenten zur Herstellung von (ii) in den Raum zwischen (i) und (iii) nicht behindert wird. Besonders bevorzugt weisen die Füllstoffe Partikelgrößen von < 0,5 mm auf.

Die Füllstoffe werden bevorzugt in Mischung mit der Polyol-komponente bei der Umsetzung zur Herstellung der Polyisocyanat-Polyadditionsprodukte eingesetzt.

Die Füllstoffe können dazu dienen, den im Vergleich beispielsweise zum Stahl größeren thermischen Ausdehnungskoeffizient der Polyisocyanat-Polyadditionsprodukte zu verringern und damit dem des Stahls anzupassen. Dies für einen nachhaltig festen Verbund zwischen den Schichten (i), (ii) und (iii) besonders vorteilhaft, da damit geringere Spannungen zwischen den Schichten bei thermischer Belastung auftreten.

Bevorzugt werden zur Herstellung von (ii) als (e) übliche Schaumstabilisatoren eingesetzt, die kommerziell erhältlich und dem Fachmann allgemein bekannt sind, beispielsweise allgemein bekannte Polysiloxan-Polyoxyalkylen-Blockcopolymere, z.B. Tegostab 2219 der Firma Goldschmidt. Der Anteil an diesen Schaumstabilisatoren bei der Herstellung von (ii) beträgt bevorzugt 0,001 bis 10 Gew.-%, besonders bevorzugt 0,01 bis 10 Gew.-%, insbesondere 0,01 bis 2 Gew.-%, bezogen auf das Gewicht der zur Herstellung von (ii) eingesetzten Komponenten (b), (e) und gegebenenfalls (d). Der Einsatz dieser Schaumstabilisatoren bewirkt, das die Komponente (c) in der Reaktionsmischung zur Herstellung von (ii) stabilisiert wird.

Als Treibmittel (f) können aus der Polyurethanchemie allgemein bekannte Treibmittel eingesetzt werden, beispielsweise physikalische und/oder chemische Treibmittel. Derartige physikalische Treibmittel weisen im allgemeinen einen Siedepunkt bei einem Druck von 1 bar von größer (d.h. bei höheren Temperaturen als) -50°C auf. Beispiele für physikalische Treibmittel sind z.B. FCKW, HFCKW, HFKW, aliphatische Kohlenwasserstoffe, cycloaliphatische Kohlenwasserstoffe, jeweils beispielsweise mit 4 bis 6 Kohlenstoffatomen oder Gemische dieser Stoffe, beispielsweise Trichlorfluormethan (Siedepunkt 24°C), Chlordifluormethan (Siedepunkt -40,8°C), Dichlorfluorethan (Siedepunkt 32°C), Chlordifluorethan (Siedepunkt -9,2°C), Dichlortrifluorethan (Siedepunkt 27,1°C), Terafluorethan (Siedepunkt -26,5°C), Hexafluorbutan (Siedepunkt 24,6°C), iso-Pentan (Siedepunkt 28°C), n-Pentan (Siedepunkt 36°C), Cyclopentan (Siedepunkt 49°C).

Als chemische Treibmittel, d.h. Treibmittel die aufgrund einer Reaktion, beispielsweise mit Isocyanatgruppen, gasförmige Produkte bilden, kommen beispielsweise Wasser, Hydratwasser haltige Verbindungen, Carbonsäuren, tert.-Alkohole, z.B. t-Butanol, Carbamate, beispielsweise die in der Schrift EP-A 1000955, insbesondere auf den Seiten 2, Zeilen 5 bis 31, sowie Seite 3, Zeilen 21 bis 42, beschrieben Carbamate, Carbonate, z.B. Ammoniumcarbonat und/oder Ammoniumhydrogencarbonat und/oder Guanidincarbamat in Betracht.

Bevorzugt werden als Treibmittel (f) Wasser und/oder Carbamate eingesetzt.

Bevorzugt werden die Treibmittel (f) in einer Menge eingesetzt, die ausreicht, um die bevorzugte Dichte von (ii) zu erhalten. Dies kann mit einfachen Routineexperimenten, die dem Fachmann allgemein geläufig sind, ermittelt werden. Besonders bevorzugt werden die Treibmittel (f) in einer Menge von 0,05 bis 10 Gew.-%, insbesondere von 0,1 bis 5 Gew.-%, jeweils bezogen auf das Gesamtgewicht der Polyisocyanat-Polyadditionsprodukte, eingesetzt.

Das Gewicht von (ii) entspricht per Definition dem Gewicht der zur Herstellung von (ii) eingesetzten Komponenten (a), (b) und gegebenenfalls (c), (d), (e) und/oder (f).

Zur Herstellung der erfindungsgemäßen Polyisocyanat-Polyadditionsprodukte werden die Isocyanate und die gegenüber Isocyanaten reaktiven Verbindungen vorzugsweise in solchen Mengen zur Umsetzung gebracht, daß das Äquivalenzverhältnis von NCO-Gruppen der Isocyanate (a) zur Summe der reaktiven Wasserstoffatome der gegenüber Isocyanaten reaktiven Verbindungen (b) und gegebenenfalls (f) 0,85 bis 1,25 : 1, vorzugsweise 0,95 bis 1,15 : 1 und insbesondere 1 bis 1,05 : 1, beträgt. Falls (ii) zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Polyisocyanat-Polyadditionsprodukte werden üblicherweise nach dem one-shot-Verfahren oder nach dem Prepolymerverfahren, beispielsweise mit Hilfe der Hochdruck- oder Niederdruck-Technik hergestellt.

Als besonders vorteilhaft hat es sich erwiesen, nach dem Zweikomponentenverfahren zu arbeiten und die gegenüber Isocyanaten reaktiven Verbindungen (b), gegebenenfalls die Treibmittel (f) und gegebenenfalls die Katalysatoren (d) und/oder Hilfs- und/oder Zusatzstoffe (e) in der Komponente (A) zu vereinigen und bevorzugt innig miteinander zu vermischen und als Komponente (B) die Isocyanate (a) zu verwenden.

Die Komponente (c) kann der Reaktionsmischung enthaltend (a), (b) und gegebenenfalls (f), (d) und/oder (e) zugeführt werden, und/ oder den einzelnen, bereits beschriebenen Komponenten (a), (b), (A) und/oder (B). Die Komponente, die mit (c) gemischt wird, liegt üblicherweise flüssig vor. Bevorzugt wird die Komponenten in die Komponente (b) gemischt.

Das Mischen der entsprechenden Komponente mit (c) kann nach allgemein bekannten Verfahren erfolgen. Beispielsweise kann (c) durch allgemein bekannte Beladungseinrichtungen, beispielsweise Luftbeladungseinrichtungen, bevorzugt unter Druck, beispielsweise aus einem Druckbehälter oder durch einen Kompressor komprimiert, z.B. durch eine Düse der entsprechenden Komponente zugeführt werden. Bevorzugt erfolgt eine weitgehende Durchmischung der entsprechende Komponenten mit (c), so daß Gasblasen von (c) in der üblicherweise flüssigen Komponente bevorzugt eine Größe von 0,0001 bis 10, besonders bevorzugt 0,0001 bis 1 mm aufweisen.

Der Gehalt an (c) in der Reaktionsmischung zur Herstellung von (ii) kann in der Rücklaufleitung der Hochdruckmaschine mit allgemein bekannten Meßgeräten über die Dichte der Reaktionsmischung bestimmt werden. Die Gehalt an (c) in der Reaktionsmischung kann über eine Kontrolleinheit bevorzugt automatisch auf der Grundlage dieser Dichte reguliert werden. Die Komponentendichte kann während der üblichen Zirkulation des Materials in der Maschine auch bei sehr niedriger Zirkulationsgeschwindigkeit online bestimmt und reguliert werden.

Die Ausgangskomponenten werden üblicherweise bei einer Temperatur von 0 bis 100°C, vorzugsweise von 20 bis 60°C, gemischt. Die Vermischung kann mechanisch mittels eines Rührers oder einer Rührschnecke, bevorzugt aber durch das bei Hochdruckmaschinen übliche Gegenstromprinzip erfolgen, bei dem A- und B-Komponenten-Strahl sich im Mischkopf unter jeweils hohem Druck treffen und vermischen, wobei der Strahl einer jeden Komponente auch geteilt sein kann. Die Reaktionstemperatur, d.h. die Temperatur, bei die Umsetzung erfolgt, beträgt üblicherweise > 20°C, bevorzugt 50 bis 150°C.

Entsprechend finden die erfindungsgemäß erhältlichen Verbundelemente Verwendung vor allem in Bereichen, in denen Konstruktionselemente benötigt werden, die großen Kräften standhalten, beispielsweise als Konstruktionsteile im Schiffbau, z.B. in Schiffsrümpfen, beispielsweise Schiffsdoppelrümpfe mit einer äußeren und einer inneren Wand, und Laderaumabdeckungen, Laderaumtrennwänden, Ladeklappen oder in Bauwerken, beispielsweise Brücken oder als Konstruktionselemente im Hausbau, insbesondere in Hochhäusern.

Die erfindungsgemäßen Verbundelemente sind nicht mit klassischen Sandwichelementen zu verwechseln, die als Kern einen Polyurethan- und/oder Polyisocyanurathartschaumstoff enthalten und üblicherweise zur thermischen Isolierung eingesetzt werden. Derartige bekannte Sandwichelemente wären aufgrund ihrer vergleichsweise geringeren mechanischen Belastbarkeit nicht für die genannten Anwendungsbereiche geeignet.

## Patentansprüche

1. Verfahren zur Herstellung von Verbundelementen, die folgende Schichtstruktur aufweisen:
(i) 2 mm bis 20 mm Metall,
(ii) 10 mm bis 300 mm Kunststoff
und gegebenenfalls
(iii) 2 mm bis 20 mm Metall,
**dadurch gekennzeichnet, daß** man (ii) durch Schmelzkleben mit (i) und gegebenenfalls (iii) verklebt, indem man die Oberfläche des Kunststoffs erweicht oder verflüssigt und in Kontakt mit der jeweiligen Oberfläche der jeweiligen Metallschicht abkühlt, man als (ii) Polylsocyanat-Polyadditionsprodukte erhältlich durch Umsetzung von (a) Iocyanaten mit (b) gegenüber Isocyanaten reaktiven Verbindungen einsetzt und man (ii) durch Umsetzung von (a) und (b) kontinuierlich in einer Bandanlage herstellt.

## Claims

1. A process for producing composite elements which have the following layer structure:
(i) from 2 mm to 20 mm of metal,
(ii) from 10 mm to 300 mm of plastic,
and optionally
(iii) from 2 mm to 20 mm of metal,
which comprises adhesively bonding (ii), by way of fusion bonding, to (i) and optionally to (iii), by softening or liquefying the surface of the plastic and cooling the same in contact with the respective surface of the respective metal layer, and by using, as (ii), polyisocyanate polyaddition products obtainable by reacting (a) isocyanates with (b) compounds reactive toward isocyanates, and by reacting (a) and (b) continuously in a belt system to produce (ii).

## Revendications

1. Procédé de fabrication d'éléments composites qui présentent la structure stratifiée suivante :
(i) 2 mm à 20 mm de métal,
(ii) 10 mm à 300 mm de plastique,
et éventuellement
(iii) 2 mm à 20 mm de métal,
**caractérisé en ce que** (ii) est collé par collage à l'état fondu avec (i) et éventuellement (iii) en ramollissant ou liquéfiant la surface du plastique et en la refroidissant en contact avec la surface respective de la couche métallique respective, des produits de polyaddition de polyisocyanate pouvant être obtenus par réaction de (a) des isocyanates avec (b) des composés réactifs avec les isocyanates sont utilisés en tant que (ii) et (ii) est fabriqué en continu dans une unité à bande par réaction de (a) et (b).
